# FASCICULE DE BREVET EUROPEEN

(11) **EP 2 326 458 B1**
(45) Date de publication et mention de la délivrance du brevet: **04.07.2012**
(21) Numéro de dépôt: 09815670.6
(22) Date de dépôt: 21.09.2009
(51) Int. Cl.: B23P 15/26, B01J 19/24, F28D 7/00, B23K 20/02, F28F 1/04, F28F 13/00

(54) **PROCÉDÉ DE FABRICATION D'UN SYSTÈME D'ÉCHANGEUR DE CHALEUR, DE PRÉFÉRENCE DU TYPE ÉCHANGEUR/RÉACTEUR**
VERFAHREN ZUR HERSTELLUNG EINES WÄRMETAUSCHERSYSTEMS, INSBESONDERE NACH ART EINES TAUSCHERS/REAKTORS
METHOD FOR MAKING A HEAT EXCHANGER SYSTEM, PREFERABLY OF THE EXCHANGER/REACTOR TYPE

(30) Priorité: 23.09.2008 FR 0856389
(43) Date de publication de la demande: 01.06.2011
(73) Titulaire: Commissariat à l'Énergie Atomique et aux Énergies Alternatives, 75015 Paris (FR)
(72) Inventeur: TOCHON, Patrice, F-38140 Uriage (FR); COUTURIER, Raphaël, F-38360 Sassenage (FR); VIDOTTO, Fabien, F-38600 Fontaine (FR)
(74) Mandataire: Ilgart, Jean-Christophe
(86) Numéro de dépôt international: PCT/EP2009/062212
(87) Numéro de publication internationale: WO 2010/034692

(56) Documents cités:
- EP-A- 0 191 602
- FR-A- 2 879 489
- GB-A- 2 312 737
- JP-A- 61 175 487
- JP-A- 2006 263 746
- JP-A- 2008 039 255
- US-A- 4 677 724
- US-A- 5 467 528

## Description

L'invention se rapporte de façon générale au domaine des échangeurs de chaleur, et préférentiellement à celui des échangeurs dits compacts à plaque, pour lesquels les échanges thermiques obtenus sont très satisfaisants, en raison de l'important rapport entre les surfaces d'échange et le volume de l'échangeur. L'invention concerne un procédé de fabrication d'un système d'échangeur de chaleur comprenant au moins un module traversé par une rangée de canaux de circulation de fluide.

L'invention concerne plus spécifiquement les systèmes d'échangeur thermique comprenant un module ou un empilement de modules formant en alternance, selon une direction d'empilement des plaques, une première zone de circulation fluidique et une seconde zone de circulation fluidique, et conçus de manière à ce qu'il se produise une réaction chimique, éventuellement catalytique, dans au moins l'une des ces zones de circulation fluidique. Ainsi, en raison de la réaction chimique rencontrée au sein d'au moins l'une de ces zones, de tels échangeurs sont également appelés réacteurs. De manière plus générale, de tels échangeurs de chaleur sont dénommés échangeur/réacteur.

Il est noté que de nombreuses applications peuvent être envisagées pour ce type de système d'échangeur, par exemple la production de produits chimiques ou pharmaceutiques, ou bien encore les installations de pile à combustible.

Le document GB-A-2 312 737, qui est considéré comme étant l'état de la technique le plus proche de l'objet de la revendication 1, décrit un procédé de fabrication d'un système d'échangeur de chaleur comprenant au moins un module traversé par une rangée de canaux de circulation de fluide, la réalisation dudit module étant mise en oeuvre de la manière suivante :
- formation d'un ensemble comprenant, en parallèle, une pluralité de conduits métalliques formant chacun, avec leur espace intérieur, l'un desdits canaux de circulation de fluide, lesdits conduits étant agencés entre deux plaques métalliques, et les espaces délimités par les conduits directement consécutifs et lesdites plaques métalliques étant vides ; et
- traitement dudit ensemble de manière à obtenir un soudage par diffusion des conduits avec lesdites plaques.

Aucun procédé de fabrication ne se révélant entièrement satisfaisant, ce type de système d'échangeur est peu répandu dans l'industrie.

Pour remédier à cet inconvénient, l'invention a pour objet un procédé de fabrication d'un système d'échangeur de chaleur comprenant au moins un module traversé par une rangée de canaux de circulation de fluide, la réalisation dudit module étant mise en oeuvre de la manière suivante :
- formation d'un ensemble comprenant, en parallèle, une pluralité de conduits métalliques formant chacun, avec leur espace intérieur, l'un desdits canaux de circulation de fluide, lesdits conduits étant agencés entre deux plaques métalliques, et les espaces délimités par les conduits directement consécutifs et lesdites plaques métalliques étant comblés par une matrice métallique de remplissage, ledit ensemble intégrant également deux éléments de raccordement métalliques, l'un étant pourvu d'une pluralité d'orifices traversants logeant respectivement l'une des deux extrémités des conduits, et l'autre étant pourvu d'une pluralité d'orifices traversants logeant respectivement l'autre des deux extrémités des conduits ; et
- traitement dudit ensemble de manière à obtenir un soudage par diffusion des conduits avec ladite matrice métallique de remplissage, avec lesdites plaques, et avec les deux éléments de raccordement métalliques.

Le module obtenu est avantageusement très peu sensible aux problèmes de corrosion, du fait de l'absence de soudure/brasure en contact avec le fluide destiné à traverser les canaux de circulation de fluide définis par ce module. La durée de vie du système d'échangeur est de ce fait accrue.

D'autre part, le module obtenu présente une parfaite étanchéité, en particulier grâce au soudage par diffusion des éléments en présence, ce qui se traduit par une sécurité renforcée.

En outre, le procédé selon l'invention autorise aisément la réalisation de modules de géométries différentes, choisies en fonction des besoins rencontrés, notamment en ce qui concerne la nature de l'échange thermique désirée. Il peut par exemple s'agir du choix du diamètre des canaux, ou encore de la forme de ces derniers, ceci conférant une modularité notable au procédé selon l'invention.

Une fois ledit traitement réalisé, la matrice solide autour des conduits définissant les canaux de circulation de fluide permet de conférer une inertie thermique importante au module du système d'échangeur, lui offrant une grande capacité à encaisser la chaleur d'une réaction exothermique, et procurant par conséquent une fiabilité et une sécurité satisfaisantes lors de l'utilisation ultérieure. Un module de même conception est de ce fait susceptible de répondre à plusieurs types de réactions exothermiques.

Par ailleurs, il est noté que le fait de pouvoir utiliser un matériau métallique à grande conductivité thermique pour la matrice de remplissage et les plaques, permet d'augmenter significativement la conductivité thermique globale du système d'échangeur intégrant un tel module, et donc de mieux dissiper la chaleur.

Une fois l'opération de traitement réalisée, les conduits, de préférence du type tubes droits, en zigzag ou de toute autre forme réputée appropriée, sont noyés dans la masse qui les entoure, constituée par la matrice de remplissage et les plaques métalliques. Le module obtenu, assimilable à une structure d'un seul tenant, est de ce fait capable de résister à des pressions et/ou des différentiels de pression très élevés, comme par exemple plusieurs centaines de bars, sans risquer d'être endommagé.

Les coûts de production associés à la mise en oeuvre du procédé selon l'invention restent avantageusement faibles, essentiellement en raison du faible coût de chacun des éléments constitutifs dudit ensemble.

Comme mentionné ci-dessus, ledit ensemble est réalisé de manière à intégrer également deux éléments de raccordement métalliques, l'un étant pourvu d'une pluralité d'orifices traversants logeant respectivement l'une des deux extrémités des conduits, et l'autre étant pourvu d'une pluralité d'orifices traversants logeant respectivement l'autre des deux extrémités des conduits. Ces deux éléments de raccordement, par exemple chacun en forme de barre, sont dédiés à l'entrée / la sortie du fluide dans les canaux du modules.

Ainsi, la mise en oeuvre dudit traitement engendre également un soudage par diffusion des extrémités des conduits avec leurs éléments de raccordement respectifs. Préférentiellement, une soudure des extrémités dans leurs orifices associés est réalisée préalablement à l'opération de traitement conduisant au soudage par diffusion des éléments en présence. Ces soudures préalables, de préférence du type TIG, sont de préférence étanches au vide secondaire, en particulier afin de pouvoir résister au traitement ultérieur de l'ensemble.

De préférence, il est réalisé un retrait de matière sur l'un des deux éléments de raccordement métalliques entre deux orifices directement consécutifs, afin de créer un canal de jonction entre ces deux orifices, puis il est procédé à la mise en place d'une plaque de fermeture sur ledit élément de raccordement concerné, afin de rendre étanche ledit canal de jonction entre les deux orifices directement consécutifs. Globalement, le canal de jonction qui en résulte permet de mettre en communication fluidique les deux canaux du module directement consécutifs qui débouchent respectivement dans les deux orifices concernés. Le fluide circulant dans le premier canal et arrivant dans le canal de jonction subit alors un retournement avant de pénétrer dans le second canal.

Ainsi, d'une manière simple, peu coûteuse et flexible, il est possible d'obtenir plusieurs configurations de distribution du fluide à travers le module, en fonction de différents critères retenus tels que le temps de séjour du fluide dans le module, ainsi que les niveaux de mélange et d'échange thermique désirés.

Au niveau des plaques de fermeture, il est avantageusement possible d'implanter un ou plusieurs instruments de mesure, afin par exemple de récolter des données concernant la température, la pression et/ou le pH. Il est également possible, par le biais de ces plaques de fermeture, d'assurer une introduction additionnelle de réactifs, et/ou d'effectuer un nettoyage des canaux en cas d'encrassement ou de solidification. Enfin, il est également possible, toujours par le biais de ces plaques de fermeture, d'ajouter des mélangeurs statiques ou tout autre insert requis, en particulier des inserts revêtus de catalyseur (s).

Le retrait de matière s'effectue de préférence par usinage, susceptible d'être mis en oeuvre à tout stade du procédé, et préférentiellement après l'opération de traitement de l'ensemble.

Ainsi, il est possible de moduler la section du canal de jonction en fonction de la profondeur de l'usinage pratiqué sur l'élément de raccordement. Ce sont ici les propriétés de mélange et d'échange thermique qui peuvent donc être modifiées par simple adaptation de la profondeur de l'usinage pratiqué.

Naturellement, toute autre solution assurant le retournement du fluide dans le module peut être envisagée, sans sortir du cadre de l'invention.

En outre, dans le cas où le système d'échangeur présente deux modules superposés, chacun avec une rangée de canaux, un tel canal de jonction peut être obtenu entre un canal du premier module et un canal du second module.

De préférence, ledit ensemble est réalisé de manière à intégrer également une enveloppe de consolidation dans laquelle est glissé le reste de l'ensemble, et dans lequel la mise en oeuvre dudit traitement conduit également au soudage par diffusion de cette enveloppe avec le reste de l'ensemble. Cette enveloppe est généralement prévue pour assurer que les interfaces entre les éléments empilés en son sein soient isolées de l'extérieur, lors du soudage par diffusion.

Préférentiellement, ledit système d'échangeur de chaleur comprend, d'un seul tenant, au moins un premier et un second modules superposés, respectivement traversés par une rangée de premiers canaux de circulation de fluide et par une rangée de seconds canaux de circulation de fluide, la réalisation desdits premier et second modules étant mise en oeuvre de la manière suivante :
- formation d'un premier ensemble comprenant, en parallèle, une pluralité de premiers conduits métalliques formant chacun, avec leur espace intérieur, l'un desdits premiers canaux de circulation de fluide, lesdits premiers conduits étant agencés entre deux premières plaques métalliques, et les espaces délimités par les premiers conduits directement consécutifs et lesdites premières plaques métalliques étant comblés par une première matrice métallique de remplissage, et la formation d'un second ensemble comprenant, en parallèle, une pluralité de seconds conduits métalliques formant chacun, avec leur espace intérieur, l'un desdits seconds canaux de circulation de fluide, lesdits seconds conduits étant agencés entre deux secondes plaques métalliques, et les espaces délimités par les seconds conduits directement consécutifs et lesdites secondes plaques métalliques étant comblés par une seconde matrice métallique de remplissage, ledit second ensemble étant superposé au premier ensemble avec la première plaque métallique et la seconde plaque métallique situées entre les premiers et seconds conduits constituées par une même plaque ; et
- traitement simultané desdits premier et second ensembles superposés de manière à obtenir un soudage par diffusion des premiers conduits avec ladite première matrice métallique de remplissage et lesdites premières plaques, ainsi qu'un soudage par diffusion des seconds conduits avec ladite seconde matrice métallique de remplissage et lesdites secondes plaques.

Naturellement, une alternative pourrait être de fabriquer indépendamment les deux modules, puis de les superposer et les assembler ultérieurement.

Par ailleurs, chacun des premier et second ensembles comprend de préférence des éléments de raccordement métalliques du type de ceux mentionnés ci-dessus.

En outre, une configuration dans laquelle le nombre de modules superposés est supérieur à deux reste bien entendu envisageable, voire même préférée.

De préférence, ledit traitement est une compression isostatique à chaud, ou toute autre technique conduisant au soudage par diffusion souhaité.

De préférence, ladite compression isostatique à chaud est réalisée à une température d'environ 1040°C, à une pression d'environ 1200 bars, pendant une durée d'environ 2 heures.

Préférentiellement, les conduits sont en acier inoxydable, et la matrice métallique de remplissage ainsi que lesdites plaques en alliage à forte conductivité thermique. Cependant, d'autres métaux et/ou alliages peuvent être employés, en fonction du type de réaction chimique effectuée.

Par exemple, ladite matrice métallique de remplissage, avant ladite étape de traitement de l'ensemble, est réalisée avec de la poudre métallique. Dans ce cas, il est donc préférentiellement fait en sorte que la consolidation de la poudre s'effectue durant l'opération de traitement. Une alternative consiste bien entendu à prévoir une matrice solide, formée par exemple de lamelle définissant entre-elles des espaces pour le logement des conduits.

De préférence, au moins l'un des canaux de circulation de fluide est équipé d'un insert, de préférence métallique, revêtu au moins partiellement d'un catalyseur autorisant une réaction chimique catalytique au sein de ce canal.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique en perspective d'un module de circulation fluidique obtenu suite à la mise en oeuvre du procédé selon un mode de réalisation préféré de la présente invention ;
- la figure 2 représente une vue éclatée en perspective de l'ensemble destiné à former ledit module de la figure 1, avant son traitement ;
- la figure 3 représente une partie agrandie de l'ensemble montré sur la figure 2 ;
- la figure 4 représente une partie de l'ensemble montré sur les figures 2 et 3, en vue de dessus ;
- la figure 5 est une vue en coupe prise le long de la ligne V-V de la figure 4 ;
- la figure 6 représente une vue partielle en coupe montrant une alternative de réalisation pour la formation des plaques métalliques et de la matrice métallique de remplissage appartenant à l'ensemble destiné à être traité ;
- les figures 7 à 9 représentent des vues schématisant l'étape de formation d'un canal de jonction entre deux canaux parallèles du module ;
- la figure 10 représente une alternative de réalisation dans laquelle un orifice de l'élément de raccordement est relié aux deux orifices disposés directement consécutivement de part et d'autre de celui-ci, respectivement par deux canaux de jonction ;
- la figure 11 représente une vue en perspective de deux modules de circulation fluidique obtenus suite à la mise en oeuvre du procédé selon un autre mode de réalisation préféré de la présente invention ;
- la figure 12 représente une vue éclatée en perspective des deux ensembles destinés à former les modules de la figure 11, avant leur traitement ;
- la figure 13 représente une alternative de réalisation pour les deux modules ;
- la figure 14 représente des vues schématisant l'étape de formation d'un ou plusieurs canaux de jonction entre les canaux des deux modules ;
- la figure 15 représente une vue schématique d'un système d'échangeur de chaleur obtenu suite à la mise en oeuvre du procédé selon un autre mode de réalisation préféré de la présente invention ;
- la figure 16 représente une vue schématique d'un système d'échangeur de chaleur obtenu suite à la mise en oeuvre du procédé selon encore un autre mode de réalisation préféré de la présente invention ; et
- les figures 17 à 22 représentent un procédé de fabrication selon un autre mode de réalisation de la présente invention, à différents stades de sa mise en oeuvre.

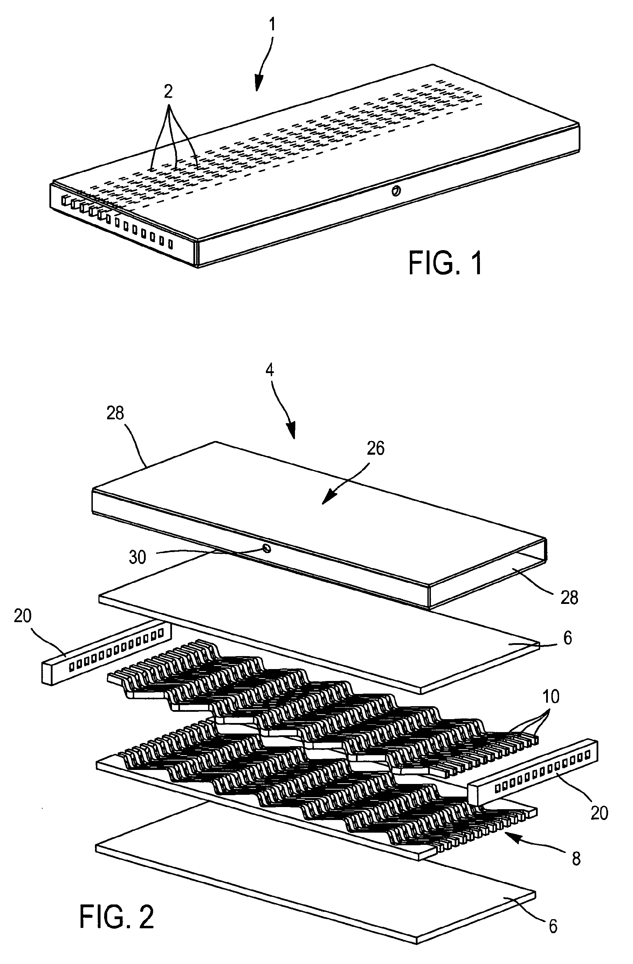

En référence à la figure 1, on peut voir un module 1 pour système d'échangeur de chaleur, de préférence du type échangeur/réacteur, par exemple prévu pour la production de produits chimiques ou pharmaceutiques. Typiquement, ce module présente une longueur de l'ordre de 30 cm, une largeur de l'ordre de 13 cm, et une épaisseur de l'ordre de 2 cm. Cependant, tout type de dimensionnement est envisageable, et fonction de l'application du système.

Le module 1, dont le procédé de fabrication spécifique à la présente invention sera décrit ci-après, présente une forme sensiblement parallélépipédique, ou de plaque, traversée par une pluralité de canaux 2 de circulation de fluide, de préférence parallèles et dits canaux élémentaires. Néanmoins, ces canaux 2 ne sont pas nécessairement cylindriques comme cela a été représenté de façon schématique par les pointillés de la figure 1, mais peuvent adopter toute forme réputée appropriée, telle que la forme dite cintrée ou en zigzag qui sera décrite ci-après. En outre, la section de ces canaux 2 peut également être adaptée en fonction des besoins rencontrés.

Pour procéder à la fabrication de ce module 1, il est tout d'abord réalisé un ensemble d'éléments empilés, cet ensemble étant référencé de manière générale par la référence 4 sur la figure 2.

L'empilement peut s'effectuer sur un support classique, de préférence horizontal, sur lequel il est tout d'abord placé une plaque métallique 6 en alliage, de préférence à forte conductivité thermique, tel qu'un alliage riche en cuivre, par exemple un alliage CuC1.

Sur la surface de cette plaque 6 est positionnée une matrice métallique 8, dite matrice de remplissage, réalisée dans le même matériau que la plaque 6, et définissant des espaces dans lesquels sont logés des conduits métalliques 10 en acier inoxydable, par exemple un acier inoxydable 316L.

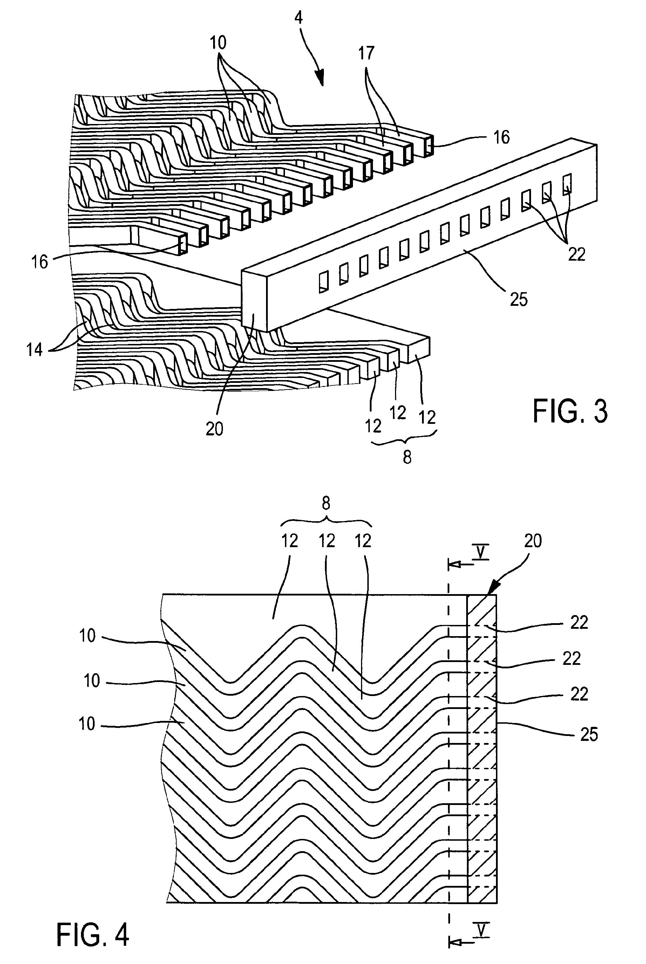

Sur la figure 3, on peut apercevoir que la matrice 8 est de préférence réalisée à partir d'une pluralité de lamelles 12 espacées les unes des autres, entre lesquelles les espaces formés 14 sont de géométrie complémentaire de celle des conduits 10, afin de n'obtenir qu'un faible jeu entre ces éléments une fois les conduits mis en place sur la plaque 6, dans les espaces dédiés 14. Les conduits 10, également dénommés tubes, sont ici de forme dite cintrée ou en zigzag. Ils forment chacun, avec leur espace intérieur 16, l'un des canaux de circulation de fluide. La section de ces conduits 10 est de forme rectangulaire, carrée, ronde, ou de toute autre forme réputée appropriée. Dans l'exemple montré, la section rectangulaire présente une hauteur d'environ 4 mm et une largeur d'environ 2 mm.

Aux extrémités des conduits 10, se trouvent respectivement deux éléments de raccordement 20 en forme de barre, par exemple l'une dédiée à l'entrée de fluide, et l'autre dédiée à la sortie de fluide. Chacune de ces barres 20 est disposée à l'extrémité de l'ensemble 4, de manière sensiblement transversale par rapport à la direction principale des conduits 10, à savoir, ultérieurement, la direction principale d'écoulement du fluide à travers le module.

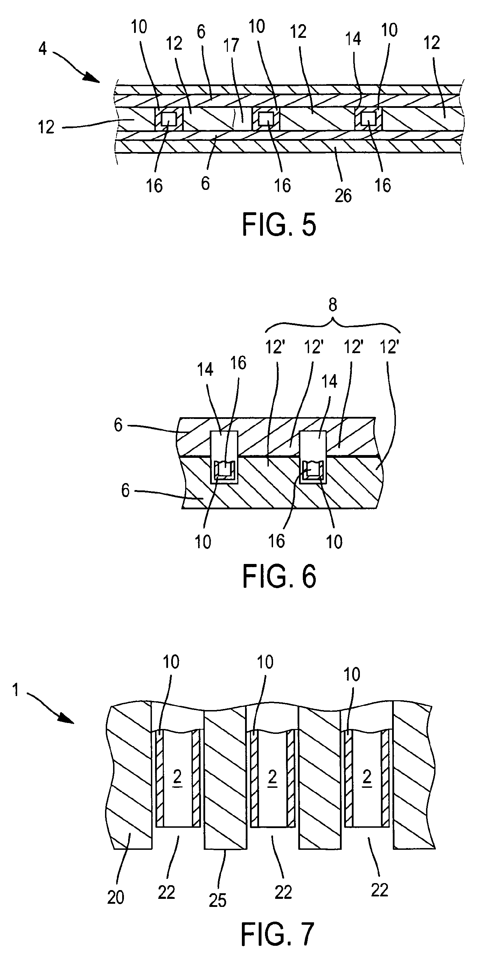

Toujours en référence à la figure 3, chaque barre 20 présente une pluralité d'orifices traversant 22, en nombre égal à celui des conduits, puisque chaque extrémité de conduit 10 est logée dans l'un des orifices 22. Plus précisément, les orifices 22 sont de géométrie complémentaire de celle des extrémités de conduits 10, afin de n'obtenir qu'un faible jeu entre ces éléments une fois les conduits insérés dans les orifices 22 des deux barres 20. Comme montré sur la figure 4, les extrémités des conduits 10, représentées en pointillés, peuvent être insérées dans les orifices 22 jusqu'à les combler entièrement, c'est-à-dire jusqu'à ce que leurs chants soit affleurant avec la surface extérieure 25 de la barre 20. Une alternative pourrait consister à n'insérer ces extrémités que partiellement dans les orifices 22, comme cela a été envisagé sur la représentation de la figure 7, qui sera décrite ultérieurement. Quoiqu'il en soit, le chant des extrémités de conduit est préférentiellement soudé dans son orifice 22 associé, sur toute la périphérie de ce chant. Ces soudures, de préférence du type TIG, sont prévues pour être étanches au vide secondaire.

L'épaisseur des conduits 10 est sensiblement identique à celle de la matrice 8, afin qu'ils forment conjointement une surface plane de support d'une autre plaque 6 sensiblement identique à la première, comme cela est montré sur les figures 2 et 5. Sur cette dernière figure, on peut donc voir que l'espace situé entre les deux plaques 6 est entièrement comblé par la matrice et les conduits, avec en effet chaque espace 17, délimité dans la direction d'empilement par les plaques 6, et dans la direction orthogonale des barres par deux conduits 10 directement consécutifs, qui est comblé par une lamelle 12 de la matrice.

L'épaisseur des barres 20 est quant à elle prévue en fonction du fait qu'elle soit ou non recouverte par les plaques 6, sachant qu'il est recherché à obtenir un empilement d'épaisseur uniforme. Ainsi, à titre d'exemple indicatif, dans le cas où les plaques 6 tangentent les barres 20 sans les recouvrir, ces dernières présentent alors une épaisseur correspondant sensiblement à la somme des épaisseurs de la matrice et des deux plaques 6. De plus, ces barres 20 délimitent également, aux extrémités des conduits 10, les espaces 17 précités.

Ensuite, cet empilement d'épaisseur uniforme est glissé dans une enveloppe de consolidation 26, fermée sur 360°, dont l'intérieur est de forme complémentaire de celle de l'empilement précité. Comme visible sur la figure 2, elle présente deux ouvertures opposées 28, au niveau desquelles les barres 20 sont destinées à être logées, respectivement. En d'autres termes, les deux barres ferment les deux ouvertures de l'enveloppe, comme on peut l'apercevoir pour l'une d'elle sur le module 1 de la figure 1.

Sur la figure 6, on peut apercevoir une alternative de réalisation pour la formation des plaques métalliques 6 et de la matrice métallique de remplissage 8. Ici, les deux plaques 6 portent chacune fixement des projections en saillie 12', en regard et contact deux à deux, ces projections 12' formant la matrice 8. Ainsi, les espaces 14 dédiés au logement des conduits sont formés entre les projections 12' et les plaques 6. Pour réaliser chacune des deux parties de cet empilement, il est possible de partir d'une plaque pleine et de l'usiner sur l'une de ses faces afin de faire apparaître les projections 12'. A cet égard, une autre alternative pourrait consister à prévoir l'intégralité de la matrice fixe sur l'une des deux plaques, de préférence d'un seul tenant avec celle-ci, et avec l'autre plaque similaire à celles montrées sur les figures précédentes.

Enfin, une possibilité réside également dans le remplacement des lamelles solides décrites ci-dessus, par de la poudre métallique dont la consolidation serait effectuée lors de l'opération ultérieure de traitement, qui va à présent être décrite.

La réalisation du module 1 est en effet poursuivie en traitant l'ensemble 4, de préférence par compression isostatique à chaud. Avant la compression, un dégazage de l'empilement est effectué, par pompage via un orifice 30 pratiqué dans la paroi de l'enveloppe, tel que montré sur la figure 1. Une fois le dégazage achevé, l'orifice 30 est obturé de manière étanche, la compression s'opère par l'application d'une pression et d'une température élevées, à savoir de préférence à une température d'environ 1040°C et à une pression d'environ 1200 bars, pendant une durée d'environ 2 heures.

Pendant cette compression, il se produit une élimination des jeux entre les éléments adjacents, ainsi que leur soudage à l'état solide, dit soudage par diffusion.

Par conséquent, les conduits 10 sont soudés par diffusion aux lamelles 12, aux barres 20 et aux plaques 6, ces dernières étant également soudées par diffusion aux lamelles 12, à l'enveloppe 26 et aux barres 20. Enfin, l'enveloppe 26 est aussi soudée par diffusion aux barres 20, de sorte qu'un module d'un seul tenant est obtenu, ce module dit monolithique correspondant à un bloc massif, par exemple multi-matériaux, traversé par des canaux.

C'est également durant cette opération de compression isostatique à chaud qu'est obtenue la consolidation de la poudre formant la matrice, lorsqu'une telle poudre est retenue.

Lors de l'utilisation du module dans un système d'échangeur thermique, le fluide est par exemple amené par un collecteur d'admission (non représenté) placé sur l'une des deux barres 20, afin de distribuer le fluide dans chacun des canaux 2 formé par l'espace intérieur 16 des conduits. Le fluide circule dans le même sens dans chacun des canaux parallèles 2, avant de s'échapper de ces derniers, et de pénétrer par exemple dans un collecteur d'échappement (non représenté) placé sur l'autre barre 20.

Néanmoins, en fonction des propriétés de mélange et d'échange thermique désirées, il peut être intéressant de faire circuler le fluide pendant une durée plus importante dans le module, par exemple en le faisant circuler dans un canal du module selon un premier sens d'écoulement, puis en le faisant circuler dans un autre canal de ce module avant de l'extraire de ce dernier, dans un second sens d'écoulement opposé au premier.

Pour ce faire, tout moyen dit de retournement de fluide peut être employé, bien que celui qui va à présent être décrit en référence aux figures 7 à 9 soit préféré.

Sur la figure 7, on peut apercevoir le module 1 après l'opération de compression isostatique à chaud. Comme mentionné précédemment, l'exemple représenté prévoit ici que les extrémités des conduits 10 ne comblent pas intégralement leurs orifices respectifs 22 de la barre 20.

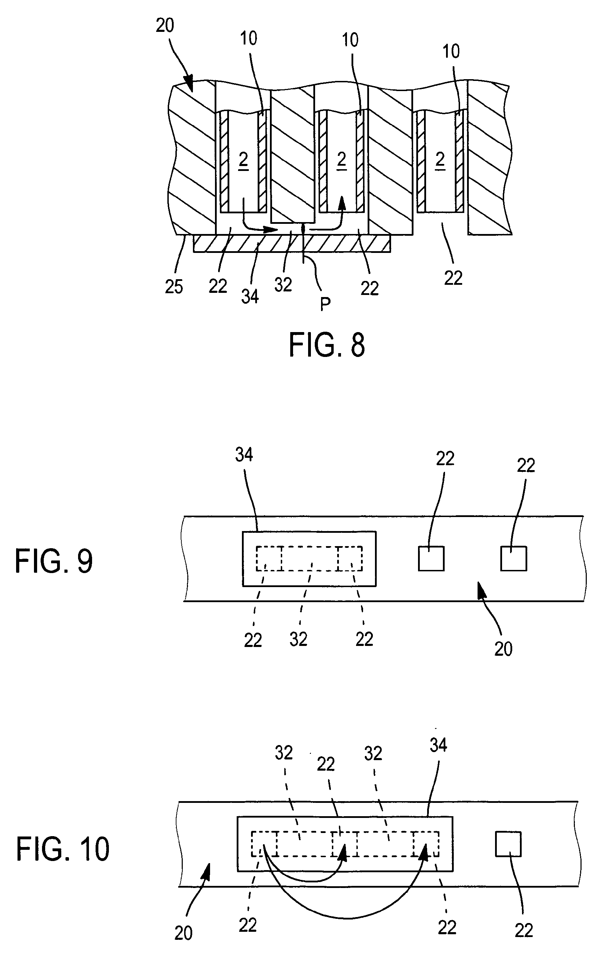

L'étape va consister à mettre en communication les deux orifices 22 à gauche de la figure. Pour ce faire, un usinage de la partie de la barre 20 située entre les deux orifices concernés est réalisée, de manière à obtenir un canal de jonction 32 entre ceux-ci, comme montré sur la figure 8. Bien entendu, la profondeur « P » de l'usinage est fonction de la dimension du canal de jonction recherchée. Ainsi, en fonction de la dimension de ce canal de jonction 32, ce sont les propriétés de mélange et d'échange thermique qui sont impactées.

En référence aux figures 8 et 9, pour rendre étanche ce canal de jonction 32, il est procédé à la mise en place d'une plaque de fermeture 34, sur la surface extérieure 25 de la barre 20, de manière à recouvrir les deux orifices 22 concernés ainsi que le canal de jonction 32, dont la plaque 34 constitue une délimitation. La fixation de la plaque 34 s'effectue de toute manière connue, par exemple par soudage ou éléments vissés. De plus, le matériau employé pour la réalisation de la plaque 34 est de préférence identique à celui des conduits 10 et de la barre 20.

Avec une telle configuration, sur la figure 8, le fluide arrive dans un premier sens de circulation par le canal de gauche 2, puis subit un retournement en traversant le canal de jonction 32, qui l'amène ensuite dans le canal 2 adjacent, qu'il emprunte dans un second sens de circulation opposé au premier. A cet égard, il est indiqué qu'une fois arrivé à l'autre extrémité de ce second canal, le fluide peut soit être extrait du module 2, soit être à nouveau retourné par un canal de jonction identique ou similaire à celui qui vient d'être présenté, pour emprunter ensuite un troisième canal dans le premier sens de circulation de fluide.

Dans l'autre cas où les extrémités de conduits viendraient combler entièrement leurs orifices respectifs, chaque canal de jonction devrait alors être réalisé en usinant non seulement la barre entre les deux orifices concernés, mais également une partie des deux extrémités de conduits.

A la plaque 34 peut être adjointe une ou plusieurs fonctions, à l'aide d'un ou plusieurs instruments de mesure, afin par exemple de récolter des données concernant la température, la pression et/ou le pH du fluide traversant les canaux. Il est également possible, par le biais de cette plaque de fermeture 34, d'assurer une introduction additionnelle de réactifs, et/ou d'effectuer un nettoyage des canaux en cas d'encrassement ou de solidification. Il est aussi possible d'ajouter des mélangeurs statiques ou tout autre insert requis, en particulier un insert revêtu d'un ou plusieurs catalyseurs.

Enfin, il est noté que toute autre technique que l'usinage peut être employée pour obtenir le retrait de matière souhaité, sans sortir du cadre de l'invention.

La figure 10 montre une alternative dans laquelle sont associés, à un orifice 22 de la barre 20, un premier canal de jonction 32 le reliant à un orifice 22 directement consécutif, ainsi qu'un second canal de jonction 32 le reliant à l'autre orifice 22 lui étant directement consécutif. Ainsi, un même orifice 22 est relié aux deux orifices 22 disposés de part et d'autre de celui-ci, préférentiellement consécutivement, respectivement par deux canaux de jonction 32, avec ces trois orifices 22 et ces deux canaux 32 recouverts par une même plaque 34 assurant l'étanchéité.

Avec une telle configuration, le fluide provenant du canal élémentaire de gauche est retourné en parallèle dans les deux canaux élémentaires suivants, en empruntant les deux canaux de jonctions 32 précités.

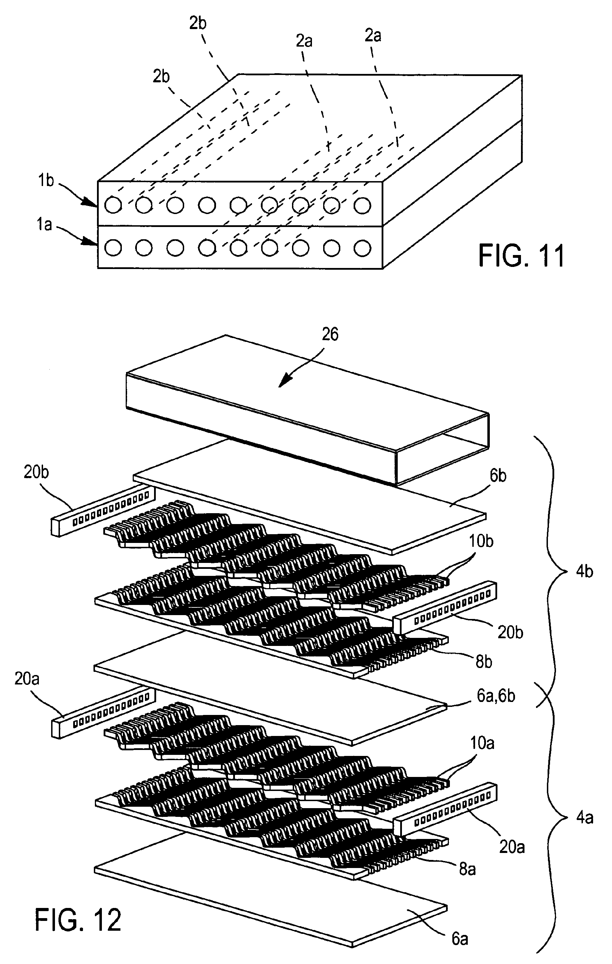

La figure 11 représente une vue en perspective de deux modules 1a, 1b de circulation fluidique, obtenus suite à la mise en oeuvre du procédé selon un autre mode de réalisation préféré de la présente invention.

Ces deux modules 1a, 1b, formant un ensemble d'un seul tenant, présentent respectivement une rangée de premiers canaux parallèles 2a, ainsi qu'une rangée de seconds canaux parallèles 2b. Globalement, ils correspondent à la superposition de deux modules 1 tel que décrit en référence aux figures précédentes.

Les premiers canaux 2a forment une première zone de circulation fluidique, tandis que les seconds canaux 2b forment une seconde zone de circulation fluidique, l'une ou chacune d'elles pouvant être équipée d'un ou plusieurs catalyseurs autorisant une réaction chimique catalytique au sein de ces zones. Comme mentionné ci-dessus, ces catalyseurs peuvent prendre la forme d'un revêtement prévu sur un insert. Cet insert, de par sa fonction accessoire, peut avantageusement être changé durant toute la vie du système d'échangeur, et prend préférentiellement la forme d'une tubulure en acier inoxydable ou en céramique, revêtue du catalyseur, pouvant quant à lui prendre la forme d'un métal noble (Pt, Rh, Pd, etc).

Bien entendu, les deux fluides distincts destinés à circuler respectivement à travers les premiers et seconds modules 1a, 1b peuvent être introduits à co-courant, à savoir dans un même sens de circulation, ou à contre-courant, à savoir dans des sens de circulation opposés. Une autre alternative consiste à prévoir, au sein de l'un ou des deux modules, un ou plusieurs retournements de fluide du type de celui décrit ci-dessus.

Pour obtenir ces deux modules, il est globalement réalisé des ensembles empilés 4a, 4b sensiblement identiques à l'ensemble 4 décrit ci-dessus, et respectivement destinés à former les deux modules 1a, 1b. En effet, en référence à la figure 12, il est tout d'abord placé une première plaque métallique 6a en alliage, de préférence à forte conductivité thermique, par exemple un alliage CuC1, sur un support.

Sur la surface de cette plaque 6a est positionnée une première matrice métallique 8a, dite matrice de remplissage, réalisée dans le même matériau que la plaque 6a, et définissant des espaces dans lesquels sont logés des premiers conduits métalliques 10a en acier inoxydable, par exemple un acier inoxydable 316L, disposés en parallèle. La matrice 8a est ici sensiblement identique à la matrice 8 décrite ci-dessus. Il est néanmoins noté que la modularité du procédé permet éventuellement de faire varier la nature de la matrice au gré de l'application à laquelle est dévolu le système d'échangeur.

Aux extrémités des conduits 10a, se trouvent respectivement deux premiers éléments de raccordement 20a en forme de barre, par exemple l'une dédiée à l'entrée de fluide, et l'autre dédiée à la sortie de fluide. Chacune de ces barres 20a est disposée à l'extrémité de l'ensemble 4a, de manière sensiblement transversale par rapport à la direction principale des conduits 10a. Comme décrit ci-dessus, chaque barre 20a présente une pluralité d'orifices traversant, en nombre égal à celui des conduits, puisque chaque extrémité de conduit 10a est logée dans l'un des logements, et soudée dans celui-ci.

L'épaisseur des conduits 10a est sensiblement identique à celle de la matrice 8a, afin qu'ils forment conjointement une surface plane de support d'une autre plaque 6a sensiblement identique à la première, comme cela est montré sur la figure 12.

Ensuite, la poursuite de l'empilement au-dessus des éléments précédents est réalisée de manière à former le second ensemble 4b, sensiblement identique au premier. Cet ensemble 4b comprend donc, de manière analogue à celle du premier empilement 4a, une seconde plaque métallique 6b, une seconde matrice de remplissage 8b définissant des espaces dans lesquels sont agencés des seconds conduits de circulation de fluide 10b disposés en parallèle, deux éléments de raccordement 20b en forme de barre, puis une autre seconde plaque métallique 6b.

Il est noté que deux barres 20a, 20b superposées peuvent alternativement être réalisées à l'aide d'une seule et même barre, sans sortir du cadre de l'invention.

Comme le montre la figure 12, on peut faire en sorte que la première plaque 6a la plus haute dans l'empilement et la seconde plaque 6b la plus basse dans l'empilement, soient constituées par une même et unique plaque métallique appartenant simultanément aux deux ensembles empilés 4a, 4b, et de part et d'autre de laquelle se trouvent les premiers et seconds conduits 10a, 10b.

Ensuite, comme pour le cas du module unique décrit précédemment, cet empilement d'épaisseur uniforme, composé par les deux ensembles 4a, 4b, est glissé dans une enveloppe de consolidation 26, fermée sur 360°, dont l'intérieur est de forme complémentaire de celle de l'empilement précité.

Afin d'obtenir le soudage par diffusion de tous les éléments en contact, il est ensuite procédé à un traitement consistant en une compression isostatique à chaud, telle que décrite ci-dessus, permettant d'obtenir les deux modules solidaires superposés 1a, 1b.

Un ou plusieurs canaux de jonction peuvent également être prévus sur ces modules, afin d'opérer des retournements de fluide. Ces canaux de jonction sont de préférence du type décrit ci-dessus.

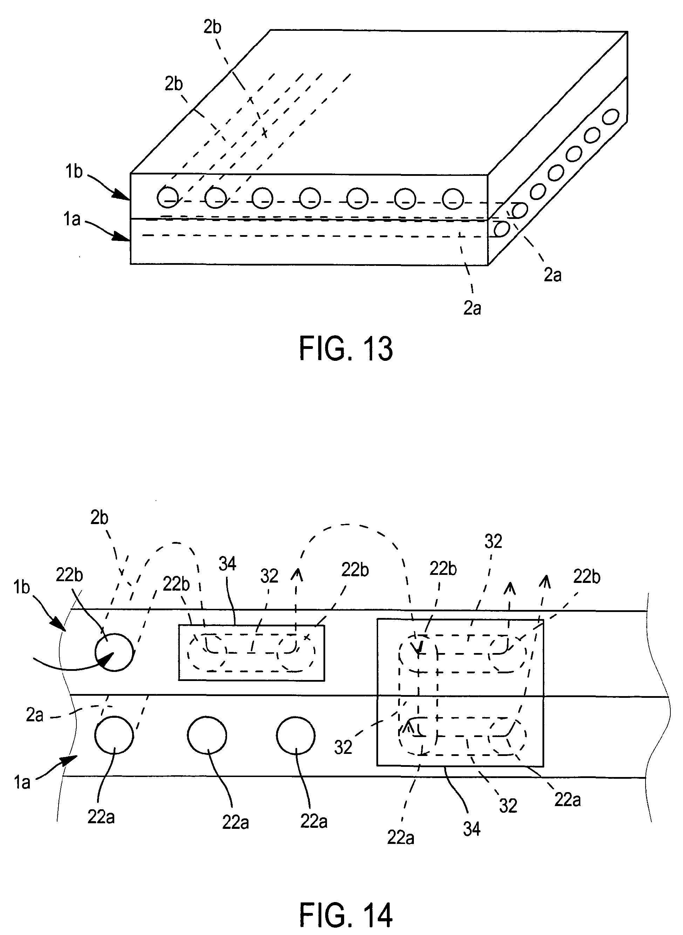

Ce cas où les deux modules 1a, 1b sont superposés peut être réalisé avec les premiers et seconds canaux 2a, 2b parallèles, comme représenté sur la figure 11, ou alternativement avec les premiers canaux 2a sensiblement orthogonaux aux seconds canaux 2b, comme représenté sur la figure 13. Cette dernière configuration assure un courant dit croisé des fluides traversant respectivement les deux modules. Elle est facilement obtenue en disposant de façon appropriée les conduits 10a, 10b dans leurs ensembles empilés respectifs.

Si tous ces exemples sont relatifs à des applications dans lesquelles deux fluides distincts sont destinés à circuler dans les deux modules 1a, 1b, respectivement, il est également envisageable de ne faire circuler qu'un seul fluide dans ces modules, dans l'intégralité ou seulement certains des canaux 2a, 2b.

Dans l'exemple de la figure 14, le fluide est introduit dans le module 1b par son orifice 22a le plus à gauche sur la figure. Il peut ensuite subir un ou plusieurs retournements à l'aide de canaux de jonction 32 obtenus grâce aux usinages et plaques de fermeture 34, tout en restant dans les canaux 2b du second module 1b. Lorsqu'il est décidé de le faire circuler simultanément dans l'un des seconds canaux 2b et le premier canal 2a qui lui est superposé, un canal de jonction 32 est opéré entre les deux orifices 22a, 22b concernés, de préférence d'une manière similaire à celle retenue pour la réalisation des canaux de jonction 32 au sein d'un même module. Une plaque de fermeture 34 est alors agencée pour rendre étanche ce canal de jonction 32, qui s'étend donc selon la direction d'empilement des éléments ayant conduit à la formation des modules. Dans le cas représenté sur la figure 14, à chacun des deux orifices 22a, 22b est également associé un canal de jonction 32 de retournement de fluide dans le canal directement consécutif du module associé. Pour rendre les trois canaux 32 étanches, une même plaque 34 peut recouvrir l'ensemble des quatre orifices concernés 22a, 22b. Ainsi, en arrivant par l'orifice 22b le plus à gauche de ceux recouverts par cette plaque 34, le fluide se distribue en parallèle dans les trois autres canaux 2a, 2b, en empruntant les trois canaux de jonction 32 et les trois orifices 22a, 22b. Le fluide retourné circule ensuite dans ces trois canaux élémentaires 2a, 2b dans un même sens de circulation.

D'une manière générale, il peut être prévu tout canal de jonction entre deux orifices 22a, 22b quelconques d'une même face de l'ensemble de modules concernés.

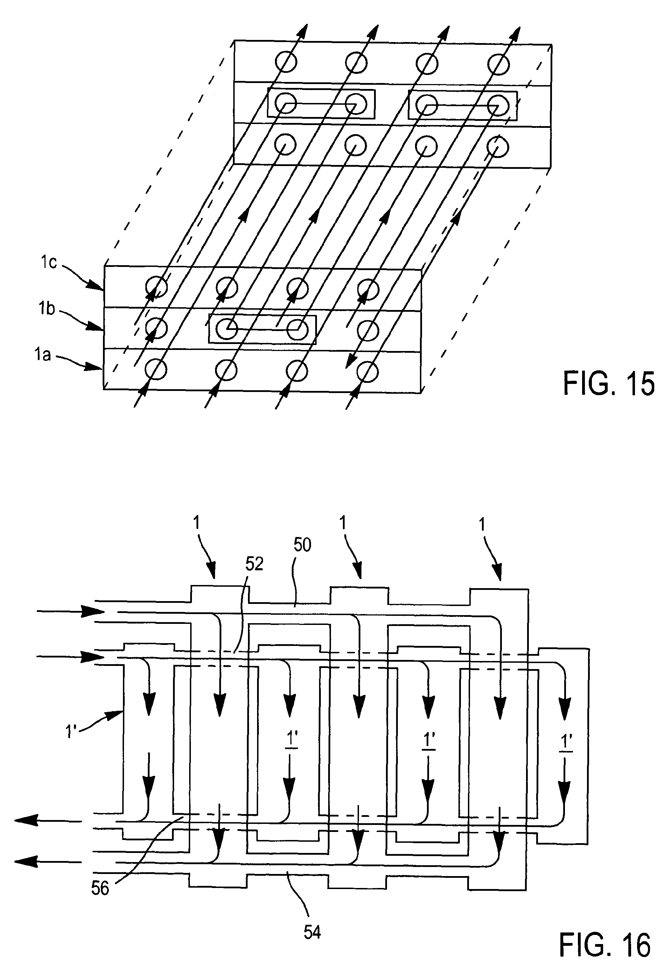

Naturellement, le nombre de modules superposés et solidaires peut être supérieur à deux, en fonction des besoins rencontrés. Sur l'exemple de la figure 15, trois modules 1a, 1b, 1c sont superposés, faisant parties d'un échangeur/réacteur. Le module intermédiaire 1b est alors de préférence équipé d'un catalyseur, de préférence sur un insert, prévu pour assurer une combustion catalytique exothermique, tandis que les deux autres modules 1a, 1c disposés de part et d'autre de celui-ci peuvent être équipés d'un catalyseur, également sur des inserts, prévu pour assurer une réaction catalytique endothermique, un transfert de chaleur s'exerçant alors parfaitement entre le module intermédiaire 1b et les modules d'extrémité 1a, 1c. Une situation inverse est également envisageable, dans laquelle le module intermédiaire 1b est équipé d'un catalyseur prévu pour assurer une combustion catalytique endothermique, pour extraire la chaleur dégagée par la combustion catalytique exothermique produite dans les modules d'extrémité 1a, 1c.

Ainsi, un même fluide peut traverser les deux modules d'extrémité 1a, 1c, avec une entrée et une sortie uniques prévues respectivement sur un collecteur d'admission et un collecteur d'échappement. Un autre fluide circule lui dans le module intermédiaire 1b. Des retournements de fluide peuvent être opérés, comme cela a été représenté pour le module intermédiaire 1b sur la figure 15. En effet, dans cet exemple, le fluide entrant dans chaque canal des modules d'extrémité 1a, 1c est extrait de son module associé dès sa sortie du canal, tandis que dans le module intermédiaire 1b, le fluide est introduit dans l'un des canaux avant de subir une pluralité de retournements pour emprunter l'ensemble des autres canaux élémentaires du module, avant d'être extrait de ce dernier.

Dans ce type d'ensemble de modules, susceptible d'être obtenu par le procédé décrit en référence aux figures précédentes, l'orientation des canaux des différents modules peut également être adaptée en fonction des besoins rencontrés.

Enfin, la figure 16 montre une autre alternative dans laquelle l'échangeur/réacteur comprend en alternance, des modules 1 et des modules 1', les premiers étant destinés à être le siège d'une réaction catalytique exothermique et les seconds étant destinés à être le siège d'une réaction catalytique endothermique, ou inversement. De préférence, on prévoit que les modules 1 sont obtenus par un procédé tel que décrit précédemment, tandis que les modules 1' sont de conception plus classique, telles que des plaques connues de l'homme du métier. Dans la réalisation exemplifiée, un collecteur de distribution 50 alimente les modules 1 en un premier fluide, tandis qu'un autre collecteur de distribution 52 alimente les modules l'en un second fluide. De plus, un collecteur d'échappement 54 récupère le premier fluide des modules 1, tandis qu'un autre collecteur d'échappement 56 récupère le second fluide des modules 1'.

En référence aux figures suivantes, on peut apercevoir un autre mode de réalisation préféré permettant d'obtenir le module 1 montré sur la figure 1.

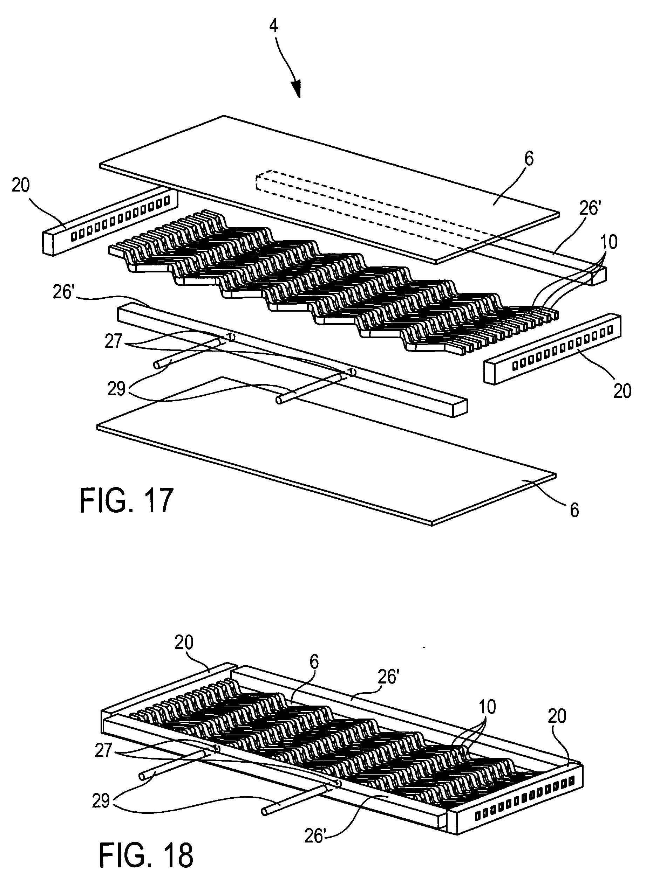

Sur la figure 17, il a été représenté un ensemble 4 d'éléments empilés, similaire à celui représenté sur la figure 2, en ce sens où l'enveloppe de consolidation a été supprimée et remplacée par deux blocs latéraux 26' disposés respectivement de part et d'autre de la pluralité de conduit 10. Ces deux blocs 26', en forme de barrette, sont positionnés de manière à être en appui sur chacune des deux plaques 6 (la plaque supérieure ayant été omise sur la figure 18 pour des raisons de clarté), et forment conjointement avec les éléments de raccordement 20 un quadrilatère entourant la pluralité des conduits 10.

L'un des deux blocs 26' est percé de deux orifices 27 permettant l'accès à intérieur de l'espace dans lequel se trouve la pluralité de conduits, chacun équipé d'un tube 29. Ces tubes et orifices servent notamment à insérer ultérieurement de la poudre formant la matrice métallique de remplissage, puisqu'une telle matrice n'est pas initialement prévue dans l'ensemble 4.

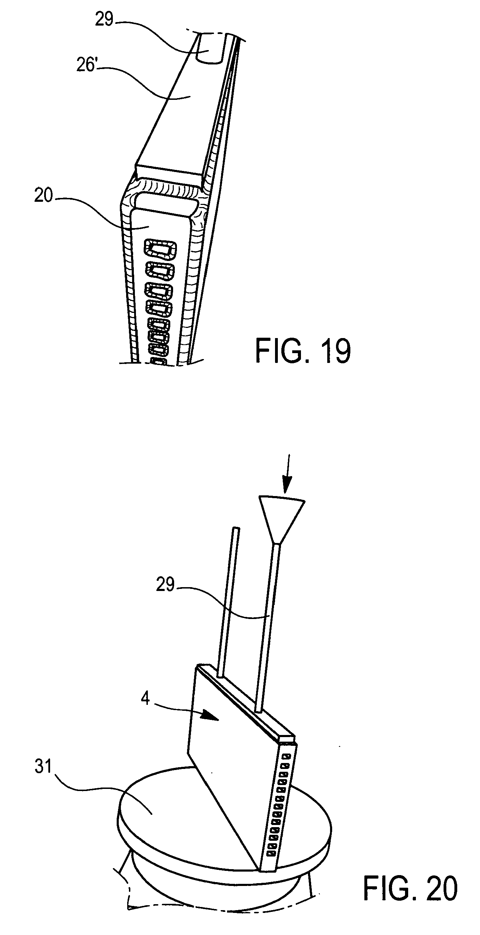

En effet, il est d'abord opéré une étape de soudage, de préférence du type TIG, entre les éléments constitutifs de l'ensemble 4, comme le montre la figure 19. Pour ce faire, les extrémité des conduits sont soudées sur les éléments de raccordement 20, eux-mêmes soudés sur les blocs 26' et les plaques 6, ces dernières étant quant à elles également soudées aux blocs 26'.

Ensuite, comme le montre la figure 20, de la poudre est insérée par l'un des tubes 29 dans l'espace clos délimité par les éléments 6, 20, 26', afin de remplir les jeux laissés libres entre les conduits. Cette poudre forme ainsi la matrice métallique de remplissage, et, pour assurer la meilleure distribution possible au sein de l'espace, l'ensemble 4 est placé verticalement sur une table vibrante 31.

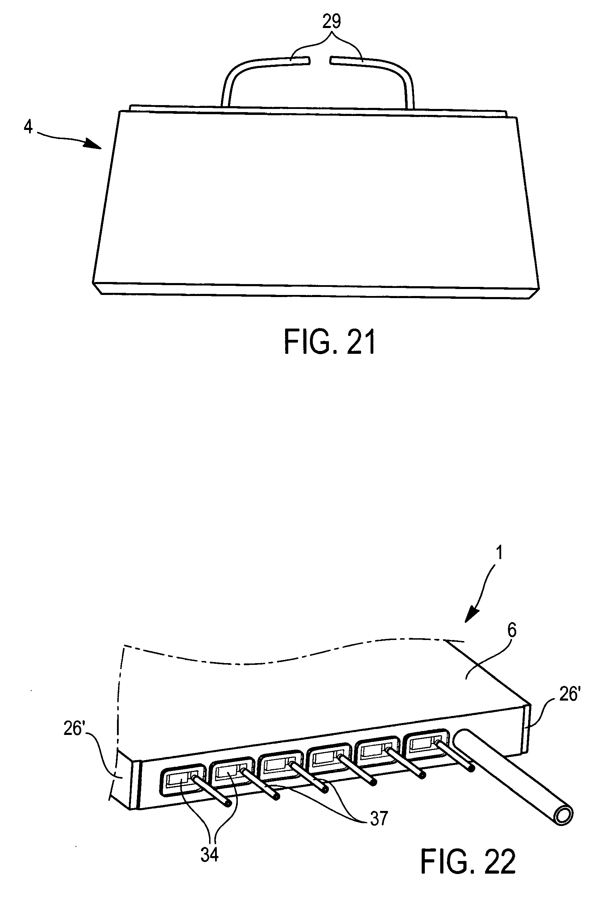

Une mise sous vide est ensuite réalisée sur l'ensemble 4, pendant près de 12 heures, toujours à l'aide des tubes 29 qui sont ensuite obturés, puis repliés comme montré sur la figure 21 avant que l'ensemble 4 ne subisse l'étape de compression isostatique à chaud. Celle-ci peut être mise en oeuvre selon le protocole suivant :

| Temps | Pression | Température |
|---|---|---|
| (h) | (bar) | (°C) |
| 0 | 1 | 20 |
| 3 | 1200 | 1000 |
| 3.5 | 1400 | 1040 |
| 5.5 | 1400 | 1040 |
| 8.5 | 1 | 20 |

Après l'étape de compression isostatique à chaud, les déformations observées sur les surfaces extérieures de l'ensemble 4 peuvent être reprises par usinage.

Des plaques de fermeture 34 sont alors mises en place sur les éléments 20 d'une manière analogue à celle décrite ci-dessus en référence aux figures 8 et 9. Ainsi, la figure 22 montre le module 1 obtenu avec des plaques de fermeture 34 reliant chacune deux conduits directement consécutifs, et ce afin de les connecter en série. Le fluide traversant le module peut ainsi entrer dans le premier conduit et n'en sortir que du dernier conduit.

Ici, chaque plaque de fermeture 34 est équipée d'un conduit 37 assurant la communication avec le canal de jonction qu'elle délimite, ce conduit pouvant permettre l'insertion d'un thermocouple pour le contrôle de la température.

Bien entendu, diverses modifications peuvent être apportées par l'homme du métier à l'invention qui vient d'être décrite, uniquement à titre d'exemples non limitatifs. En particulier, l'ensemble des caractéristiques décrites sont susceptibles de s'appliquer à tout mode de réalisation préféré envisagé.

## Revendications

1. Procédé de fabrication d'un système d'échangeur de chaleur comprenant au moins un module (1) traversé par une rangée de canaux de circulation de fluide (2), la réalisation dudit module étant mise en oeuvre de la manière suivante :
- formation d'un ensemble (4) comprenant, en parallèle, une pluralité de conduits métalliques (10) formant chacun, avec leur espace intérieur (16), l'un desdits canaux de circulation de fluide (2), lesdits conduits étant agencés entre deux plaques métalliques (6, 6), et les espaces (17) délimités par les conduits directement consécutifs et lesdites plaques métalliques étant comblés par une matrice métallique de remplissage (8), ledit ensemble (4) intégrant également deux éléments de raccordement métalliques (20, 20), l'un étant pourvu d'une pluralité d'orifices traversants (22) logeant respectivement l'une des deux extrémités des conduits, et l'autre étant pourvu d'une pluralité d'orifices traversants (22) logeant respectivement l'autre des deux extrémités des conduits ; et
- traitement dudit ensemble (4) de manière à obtenir un soudage par diffusion des conduits (10) avec ladite matrice métallique de remplissage (8), avec lesdites plaques (6, 6), et avec les deux éléments de raccordement métalliques (20, 20).

2. Procédé selon la revendication 1, dans lequel il est réalisé un retrait de matière sur l'un des deux éléments de raccordement métalliques (20) entre deux orifices (22) directement consécutifs, afin de créer un canal de jonction (32) entre ces deux orifices, puis il est procédé à la mise en place d'une plaque de fermeture (34) sur ledit élément de raccordement concerné (20), afin de rendre étanche ledit canal de jonction (32) entre les deux orifices directement consécutifs.

3. Procédé selon l'une quelconque des revendications précédentes, dans lequel ledit ensemble (4) est réalisé de manière à intégrer également une enveloppe de consolidation (26) dans laquelle est glissé le reste de l'ensemble, et dans lequel la mise en oeuvre dudit traitement conduit également au soudage par diffusion de cette enveloppe (26) avec le reste de l'ensemble.

4. Procédé selon l'une quelconque des revendications précédentes, dans lequel ledit système d'échangeur de chaleur comprend, d'un seul tenant, au moins un premier et un second modules superposés (1a, 1b), respectivement traversés par une rangée de premiers canaux de circulation de fluide (2a) et par une rangée de seconds canaux de circulation de fluide (2b), la réalisation desdits premier et second modules étant mise en oeuvre de la manière suivante :
- formation d'un premier ensemble (4a) comprenant, en parallèle, une pluralité de premiers conduits métalliques (10a) formant chacun, avec leur espace intérieur, l'un desdits premiers canaux de circulation de fluide (2a), lesdits premiers conduits (10a) étant agencés entre deux premières plaques métalliques (6a, 6a), et les espaces délimités par les premiers conduits directement consécutifs et lesdites premières plaques métalliques étant comblés par une première matrice métallique de remplissage (8a), et la formation d'un second ensemble (4b) comprenant, en parallèle, une pluralité de seconds conduits métalliques (10b) formant chacun, avec leur espace intérieur, l'un desdits seconds canaux de circulation de fluide (2b), lesdits seconds conduits (10b) étant agencés entre deux secondes plaques métalliques (6b, 6b), et les espaces délimités par les seconds conduits directement consécutifs et lesdites secondes plaques métalliques étant comblés par une seconde matrice métallique de remplissage (8b), ledit second ensemble étant superposé au premier ensemble, avec la première plaque métallique (6a) et la seconde plaque métallique (6b), situées entre les premiers et seconds conduits, étant constituées par une même plaque ; et
- traitement simultané desdits premier et second ensembles superposés (4a, 4b) de manière à obtenir un soudage par diffusion des premiers conduits (10a) avec ladite première matrice métallique de remplissage (8a) et lesdites premières plaques (6a, 6a), ainsi qu'un soudage par diffusion des seconds conduits (10b) avec ladite seconde matrice métallique de remplissage (8b) et lesdites secondes plaques (6b, 6b).

5. Procédé selon l'une quelconque des revendications précédentes, dans lequel ledit traitement est une compression isostatique à chaud.

6. Procédé selon la revendication 5, **caractérisé en ce que** ladite compression isostatique à chaud est réalisée à une température d'environ 1040°C, à une pression d'environ 1200 bars, pendant une durée d'environ 2 heures.

7. Procédé selon l'une quelconque des revendications précédentes, **caractérisé en ce que** les conduits (10) sont en acier inoxydable, et la matrice métallique de remplissage (8) ainsi que lesdites plaques (6, 6) en alliage à forte conductivité thermique.

8. Procédé selon l'une quelconque des revendications précédentes, **caractérisé en ce que** ladite matrice métallique de remplissage (8), avant ladite étape de traitement de l'ensemble, est réalisée avec de la poudre métallique.

9. Procédé selon l'une quelconque des revendications précédentes, **caractérisé en ce qu'**au moins l'un des canaux de circulation de fluide (2) est équipé d'un insert revêtu au moins partiellement d'un catalyseur autorisant une réaction chimique catalytique au sein de ce canal.

## Claims

1. Method for producing a heat exchanger system comprising at least one module (1) traversed by a row of fluid circulation, channels (2), the embodiment of said module being implemented as follows:
- formation of an assembly (4) comprising, in parallel, a plurality of metal conduits (10) each forming, with the inner space (16) thereof, one of said fluid circulation channels (2), said conduits being arranged between two metal plates (6, 6), and the spaces (17) defined by the directly consecutive conduits and said metal plates being filled by a metal filling substance (8), said assembly (4) also including two metal connection elements (20, 20), one being provided with a plurality of through orifices (22) respectively housing one of the two ends of the conduits, and the other being provided with a plurality of through orifices (22) respectively housing the other of the two ends of the conduits; and
- treatment of said assembly (4) so as to obtain diffusion welding of the conduits (10) with said metal filling substance (8), with said plates (6, 6), and with the two metal connection elements (20, 20).

2. Method according to claim 1, wherein material removal is carried out on one of the two metal connection elements (20) between two directly consecutive orifices (22), so as to create a joining channel (32) between these two orifices, and a closing plate (34) is positioned on said connection element in question (20), to seal said joining channel (32) between the two directly consecutive orifices.

3. Method according to any of the above claims, wherein said assembly (4) is embodied so as to also include a consolidation casing (26) wherein the rest of the assembly is inserted, and wherein the implementation of said treatment also result in the diffusion welding of said casing (26) with the rest of the assembly.

4. Method according to any of the above claims, wherein said heat exchanger system comprises, in one piece, at least one first and one second stacked modules (1a, 1b), respectively traversed by a row of first fluid circulation channels (2a) and by a row of second fluid circulation channels (2b), the embodiment of said first and second modules being implemented as follows:
- formation of a first assembly (4a) comprising, in parallel, a plurality of first metal conduits (10a) each forming, with the inner space thereof, one of said first fluid circulation channels (2a), said first conduits (10a) being arranged between two first metal plates (6a, 6a), and the spaces defined by the directly consecutive first conduits and said first metal plates being filled by a first metal filling substance (8a), and the formation of a second assembly (4b) comprising, in parallel, a plurality of second metal conduits (10b) each forming, with the inner space thereof, one of said second fluid circulation channels (2b), said second conduits (10b) being arranged between two second metal plates (6b, 6b), and the spaces defined by the directly consecutive second conduits and said second metal plates being filled by a second metal filling substance (8b), said second assembly being stacked on the first assembly with the first metal plate (6a) and the second metal plate (6b), situated between the first and second conduits consisting of the same plate; and
- simultaneous treatment of said first and second stacked assemblies (4a, 4b) so as to obtain diffusion welding of the first conduits (10a) with said first metal filling substance (8a) and said first plates (6a, 6a), and diffusion welding of the second conduits (10b) with said second metal filling substance (8b) and said second plates (6b, 6b).

5. Method according to any of the above claims, wherein said treatment is a hot isostatic compression.

6. Method according to claim 5, **characterised in that** said hot isostatic compression is carried out at a temperature of approximately 1040°C, at a pressure of approximately 1200 bar, for approximately 2 hours.

7. Method according to any of the above claims, **characterised in** the conduits (10) are made of stainless steel and the metal filling substance (8) and said plates (6, 6) of an alloy with a high heat conductivity.

8. Method according to any of the above claims, **characterised in that** said metal filling substance (8), before said assembly treatment step, is made of metal powder.

9. Method according to any of the above claims, **characterised in that** at least one of the fluid circulation channels (2) is equipped with an insert, preferably made of metal, coated at least partially with a catalyst enabling a catalytic chemical reaction inside said channel.

## Patentansprüche

1. Verfahren zur Herstellung eines Wärmetauscher-Systems, umfassend wenigstens ein Modul (1), welches von einer Reihe von Fluid-Zirkulationskanälen (2) durchquert wird, wobei die Herstellung des Moduls auf folgende Weise erfolgt:
- Bildung einer Anordnung (4), welche, parallel zueinander, eine Mehrzahl von metallischen Leitungen (10) umfasst, von welchen jede mit ihrem Innenraum (16) einen von den Fluid-Zirkulationskanälen (2) bildet, wobei die Leitungen zwischen zwei metallischen Platten (6, 6) angeordnet sind, und wobei die Räume (17) welche durch die direkt aufeinander folgenden Leitungen und die metallischen Platten begrenzt sind, mit einer metallischen Füllmatrix (8) gefüllt sind, wobei die Anordnung (4) ebenfalls zwei metallische Anschlusselemente (20, 20) umfasst, wobei das eine mit einer Mehrzahl von Durchgangslöchern (22) versehen ist, welche jeweils das eine von zwei Enden der Leitungen aufnehmern, und das andere mit einer Mehrzahl von Durchgangslöchern (22) versehen ist, welche jeweils das andere der zwei Enden der Leitungen aufnehmen, und
- Behandlung der Anordnung (4) auf solch eine Weise, dass eine Diffusionsverschweißung der Leitungen (10) mit der metallischen Füllmatrix (8), mit den Platten (6, 6) und mit den zwei metallischen Anschlusselementen (20, 20) erhalten wird.

2. Verfahren nach Anspruch 1, wobei an einem der zwei metallischen Anschlusselemente (20) zwischen zwei direkt aufeinander folgenden Löchern (22) eine Materialausnehmung vorgesehen wird, um einen Verbindungskanal (32) zwischen den zwei Löchern zu erzeugen, und danach eine Verschlussplatte (34) an dem betreffenden
Anschlusselement (20) angebracht wird, um den Verbindungskanal (32) zwischen den zwei direkt aufeinander folgenden Löchern abzudichten.

3. Verfahren nach einem der vorhergehenden Ansprüche, wobei die Anordnung (4) so hergestellt wird, dass sie weiterhin eine Verstärkungshülle (26) aufweiset, in welche der Rest der Anordnung eingeschoben wird, und wobei die Durchführung der Behandlung ebenfalls zu einer Diffusionsverschweißung der Hülle (26) mit dem Rest der Anordnung führt.

4. Verfahren nach einem der vorhergehenden Ansprüche, wobei das Wärmetauscher-System, in einem Stück zusammenhängend, wenigstens ein erstes und ein zweites Modul (1a, 1b) umfasst, die übereinander angeordnet sind, und die jeweils von einer Reihe von ersten Fluid-Zirkulationskanälen (2a) bzw. von einer Reihe von zweiten Fluid-Zirkulationskanälen (2b) durchquert werden, wobei die Herstellung von dem ersten und dem zweiten Modul in der folgenden Weise erfolgt:
- Bildung einer ersten Anordnung (4a), welche, parallel zueinander, eine Mehrzahl von ersten metallischen Leitungen (10a) umfasst, von denen jede mit ihrem Innenraum einen von den ersten Fluid-Zirkulationskanälen (2a) bildet, wobei die ersten Leitungen (10a) zwischen zwei ersten metallischen Platten (6a, 6a) angeordnet sind, und die Räume, die von den ersten Leitungen, die direkt aufeinander folgen, und den ersten metallischen Platten begrenzt werden, mit einer ersten metallischen Füllmatrix (8a) gefüllt sind, und Bildung einer zweiten Anordnung (4b), welche, parallel zueinander, eine Mehrzahl von zweiten metallischen Leitungen (10b) umfasst, von denen jede mit ihrem Innenraum einen von den zweiten Fluid-Zirkulationskanälen (2b) bildet, wobei die zweiten Leitungen (10b) zwischen zwei zweiten metallischen Platten (6b, 6b) angeordnet sind, und wobei die Räume, die durch die direkt aufeinander folgenden zweiten Leitungen und die zweiten metallischen Platten begrenzt sind, mit einer zweiten metallischen Füllmatrix (8b) gefüllt sind, wobei die zweite Anordnung über der ersten Anordnung angeordnet wird, wobei die erste metallische Platte (6a) und die zweite metallischen Platte (6b), die sich zwischen den ersten und den zweiten Leitungen befinden, durch dieselbe Platte gebildet werden, und
- gleichzeitige Behandlung der ersten und der zweiten übereinander angeordneten Anordnung (4a, 4b) in der Weise, dass eine Diffusionsverschweißung der ersten Leitungen (10a) mit der ersten metallischen Füllmatrix (8a) und den ersten Platten (6a, 6a) erhalten wird, wie auch eine Diffusionsverschweißung der zweiten Leitungen (10b) mit der zweiten metallischen Füllmatrix (8b) und den zweiten Platten (6b, 6b).

5. Verfahren nach einem der vorhergehenden Ansprüche, wobei die Behandlung ein heißisostatisches Pressen ist.

6. Verfahren nach Anspruch 5, **dadurch gekennzeichnet, dass** das heißisostatische Pressen bei einer Temperatur von etwa 1040 °C durchgeführt wird, bei einem Druck von ungefähr 1200 bar während einer Dauer von ungefähr 2 Stunden.

7. Verfahren nach einem der vorhergehenden Ansprüche, **dadurch gekennzeichnet, dass** die Leitungen (10) aus rostfreiem Stahl bestehen, und die metallische Füllmatrix (8) sowie die Platten (6, 6) aus einer Legierung mit hoher Wärmeleitfähigkeit bestehen.

8. Verfahren nach einem der vorhergehenden Ansprüche, **dadurch gekennzeichnet, dass** die metallische Füllmatrix (8) vor dem Schritt der Behandlung der Anordnung aus metallischem Pulver hergestellt wird.

9. Verfahren nach einem der vorhergehenden Ansprüche, **dadurch gekennzeichnet, dass** wenigstens einer der Fluid-Zirkulationskanäle (2) mit einem Einsätz versehen ist, der wenigstens teilweise mit einem Katalysator verkleidet ist, der eine katalytische chemische Reaktion in dem Kanal ermöglicht.
